# EUROPÄISCHE PATENTSCHRIFT

(11) **EP 3 174 766 B1**
(45) Veröffentlichungstag und Bekanntmachung des Hinweises auf die Patenterteilung: **04.04.2018**
(21) Anmeldenummer: 15739521.1
(22) Anmeldetag: 23.07.2015
(51) Int. Cl.: B60T 1/10, B60T 8/1766, B60T 8/26, B60T 13/58, B60T 17/22, B60T 11/20

(54) **BREMSSYSTEM MIT EINER FÄHIGKEIT ZUR ÜBERBLENDUNG**
BRAKE SYSTEM HAVING A BLENDING CAPABILITY
SYSTÈME DE FREINAGE À CAPACITÉ DE RÉPARTITION

(30) Priorität: 01.08.2014 DE 102014011598
(43) Veröffentlichungstag der Anmeldung: 07.06.2017
(73) Patentinhaber: Audi AG, 85045 Ingolstadt (DE)
(72) Erfinder: KLINGER, Thomas, 85057 Ingolstadt (DE); SCHMID, Wolfgang, 85354 Freising (DE)
(74) Vertreter: Reichert, Thomas Klaus
(86) Internationale Anmeldenummer: PCT/EP2015/001511
(87) Internationale Veröffentlichungsnummer: WO 2016/015843

(56) Entgegenhaltungen:
- DE-A1- 2 426 294
- DE-A1-102011 008 928
- GB-A- 1 141 209

## Beschreibung

Die Erfindung betrifft eine Bremsanlage für ein Kraftfahrzeug gemäß der im Oberbegriff des Patentanspruches 1 angegebenen Art.

Bekanntlich besteht bei Hybridfahrzeugen die Problematik, dass bei einer elektrisch angetriebenen Hinterachse diese bei einem Bremseingriff maximal rekuperieren soll und dass die mechanische Bremsanlage - die dem Elektromotor parallel geschaltet ist - möglichst wenig mitbremst. Grund dafür ist, dass ein möglichst großer Anteil der Bremsenergie in elektrische Energie umgewandelt werden soll. Aufgrund von unterschiedlichen Gegebenheiten ist jedoch die Rekuperationsleistung des Elektromotor-Batterieverbundes nicht konstant, sondern ist von diversen Randbedingungen abhängig, wie z.B. vom Ladezustand der Batterie, von der Betriebstemperatur des Elektromotors etc. Daher ist es wünschenswert, dass die Bremsanlage blendingfähig ist, d.h. dass eine flexible Aufteilung der Bremsleistung zwischen Rekuperieren und hydraulischer Bremsanlage ermöglicht ist.

Ein Verfahren und eine Vorrichtung zur Rekuperation von Energie bei einem Bremsvorgang eines Hybridfahrzeugs ist in der DE 10 2005 039 314 A1 offenbart. Die offenbarte, blendingfähige Bremsanlage umfasst ein Druckminderungsventil, mit dem der von Fahrer ausgeübte Bremsdruck in Abhängigkeit vom Verzögerungsanteil der elektrischen Maschine reduziert wird.

Wird nun bei einem Hybridfahrzeug, bei dem z.B. die Hinterachse elektrisch angetrieben ist, und das eine aus dem Stand der Technik bekannte hydraulische Bremse (=> Schwarz/Weiß-Aufteilung der Bremskreisläufe, d.h. getrennte Bremskreisläufe für Vorder- und Hinterachse, die von einem Hauptbremszylinder in Tandem-Bauweise mit hydraulischen Bremsdruck versorgt werden) aufweist, dem der Hinterachse zugeordneten Bremskreislauf zur Reduzierung der Bremsleistung Hydraulikflüssigkeit entnommen (Druckminderung), gleicht der Schwimmkolben des Hauptbremszylinders dies wieder aus, mit der Folge, dass nunmehr aufgrund des zusätzlichen elektrischen Bremsmoment an der Hinterachse, die Hinterachse überbremst wird.

Die WO 2010/083925 A1 offenbart ein elektrohydraulisches Bremssystem zur Verwendung in Fahrzeugen, die mittels Generatorbetrieb eines elektrischen Antriebsmotors abbremsbar sind. Das Bremssystem weist u. a. einen Bremskraftverstärker sowie eine elektronische Steuereinheit auf, die zum Verteilen der Bremswirkung auf einen generatorischen Anteil bzw. Rekuperationsbremsanteil und einen Reibungsbremsanteil vorgesehen ist. Um die Druckmittelaufnahme, insbesondere bei Rekuperationsbremsungen, zu optimieren, wird erfindungsgemäß vorgeschlagen, dass der Bremskraftverstärker durch die elektronische Steuereinheit elektrisch ansteuerbar ausgebildet ist.

Die DE 2625713 A1 zeigt eine Zweikreisbremsanlage für Kraftfahrzeuge mit einem umschaltbaren Hauptbremszylinder, der für die beiden Bremskreise zwei Druckräume aufweist, von denen der Druckraum für den Vorderachsbremskreis einen größeren Querschnitt als der für den Hinterachsbremskreis aufweisen kann und die durch eine außerhalb des Hauptbremszylinders verlaufende Leitung miteinander verbunden sind, in der ein in Abhängigkeit von der Fahrzeugbelastung wirksames Umschaltventil angeordnet ist, das die Verbindung zwischen den beiden Druckräumen herzustellen und zu unterbrechen vermag, zwischen denen im Hauptbremszylinder koaxial zu den beiden Druckkolben ein Zwischenkolben angeordnet ist, der in einer Führungshülse kleineren Durchmessers frei beweglich und auf beiden Seiten mit zentralen Fortsätzen zum mechanischen Zusammenwirken mit den beiden Druckkolben versehen ist. Die Zweikreisbremsanlage ist dadurch gekennzeichnet, dass das Umschaltventil in Abhängigkeit von der Beladung, von dem im Bremszylinder herrschenden Druck und von der mit diesem Druck erreichbaren Verzögerung umschaltbar ist.

Eine gattungsgemäße, sämtliche Merkmale des Oberbegriffs des Patentanspruches 1 aufweisende Bremsanlage für ein Kraftfahrzeug ist aus der DE 10 2011 008 928 A1 bekannt.

Der Erfindung liegt die Aufgabe zugrunde, eine Bremsanlage für ein Kraftfahrzeug gemäß der im Oberbegriff des Patentanspruches 1 angegebenen Art derart weiterzubilden, dass eine Überbremsung einer Achse des Kraftfahrzeugs verhindert wird.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst die Bremsanlage für ein Kraftfahrzeug eine hydraulische Bremse, deren Hauptbremszylinder einen ersten und einen zweiten Bremskolben aufweist, wobei der erste Bremskolben einen einer ersten Fahrzeugachse zugeordneten ersten Bremskreislauf und der zweite Bremskolben einen davon getrennten, einer zweiten Fahrzeugachse zugeordneten Bremskreislauf mit hydraulischem Bremsdruck versorgt. Zudem umfasst die Bremsanlage einen als Rekuperator einsetzbaren Elektromotor an der ersten Fahrzeugachse sowie ein Blendingmittel, das - sobald der Elektromotor rekuperiert - dem der ersten Fahrzeugachse zugeordneten ersten Bremskreislauf Hydraulikflüssigkeit entzieht. Zudem ist im Hauptbremszylinder zwischen dem ersten und dem zweiten Bremskolben eine Trennwand ausgebildet, die den Hauptbremszylinder in eine dem ersten Bremskolben zugeordnete erste Druckkammer und eine davon getrennte, dem zweiten Bremskolben zugeordnete zweite Druckkammer unterteilt, wobei der erste und zweite Bremskolben starr miteinander verbunden sind.

Erfindungsgemäß sind der erste und zweite Bremskreislauf über einen zu- und abschaltbaren Schwimmkolben hydraulisch kommunizierend miteinander verbunden.

Aufgrund der starren Anordnung der beiden Bremskolben kann ein Druckausgleich im Hauptbremszylinder bei abgeschaltetem Schwimmkolben nicht stattfinden. Somit ist in vorteilhafter Weise sichergestellt, dass bei Rekuperation des Elektromotors an der ersten Fahrzeugachse eine Veränderung der hydraulischen Bremskraftverteilung zwischen dem ersten und zweiten hydraulischen Bremskreislauf unterbleibt, mit der Folge, dass eine Überbremsung der ersten Fahrzeugachse erfolgreich vermieden wird. Somit ist gewährleistet, dass bei Rekuperation des Elektromotors eine Veränderung der Bremskraftverteilung vermieden wird, mit der Folge, dass das Kraftfahrzeug gleich reagiert, egal welcher Anteil die Rekuperation an der Bremsleistung hat. Die Anordnung des zu- und abschaltbaren Schwimmkolbens hat den Vorteil, dass bei einem rein hydraulischen Bremsvorgang, d.h. eine Rekuperationsmoment steht nicht zur Verfügung, entsprechend einem bekannten Hauptbremszylinder in Tandem-Bauweise ein Druckausgleich zwischen den beiden Bremskreisläufen gewährleistet ist.

Gemäß einer ersten Ausführungsform ist hierbei das Blendingmittel als ein über eine elektrische Steuer- und Regeleinheit elektrisch angesteuerter Aktuator ausgebildet. Durch eine entsprechende Regelung/Steuerung ist in vorteilhafte sichergestellt, dass bei einer Rekuperationsphase des Elektromotors die hydraulische Bremsleistung an der ersten Fahrzeugachse proportional zum Rekuperationsmoment verringert wird. Ein weiterer Vorteil der Ausbildung des Blendingmittels als ein elektrisch ansteuer-/regelbarer Aktuator ist, dass durch eine entsprechende Regelung/Steuerung weitere vorteilhafte Einstellungen möglich sind, z.B. Synchronisation der hydraulischen Bremsleistung im ersten und zweiten Bremskreislauf, d.h. Bremsdruck im ersten und zweiten Bremskreislauf sind unterschiedlich; die Gesamtbremsleistung aus Bremsleistung erster Bremskreislauf und zweiter Bremskreislauf und Rekuperationsmoment ist konstant.

Vorzugsweise weist die Bremsanlage zudem noch eine mit der Steuer- und Regeleinheit kommunizierenden Erfassungsvorrichtung auf, die bei einer Bremsanforderung eines Fahrers das vom Rekuperator bereitgestellte Bremsmoment - Rekuperationsmoment - ermittelt. Zudem steuert die Steuer- und Regeleinheit den elektrischen Aktuator so an, dass dieser dem ersten Bremskreislauf soviel Hydraulikflüssigkeit entnimmt, dass der Bremsdruck im ersten Bremskreislauf um den dem Rekuperationsmoment entsprechenden Bremsteildruck reduziert ist. Diese Ausgestaltung erweist sich als besonders vorteilhaft, da nunmehr eine optimale Aufteilung zwischen hydraulischem Bremsmoment und Rekuperationsmoment gewährleistet ist, mit der Folge, dass bei einem Bremsvorgang der größtmögliche Anteil der kinetischen Energie in elektrische Energie umgewandelt werden kann.

Gemäß einer anderen Ausführungsform der Erfindung ist das Blendingmittel als ein mechanisch angesteuertes Stellglied, z.B. in Form eines Hubzylinders, ausgebildet, welches automatisch proportional zum Rekuperationsmoment Volumen, d.h. Hydraulikflüssigkeit, aus dem ersten Bremskreislauf entzieht. Beispielsweise ist eine Kugelrampe direkt am Elektromotor oder dessen Getriebe angeordnet, welche eine Hubänderung abhängig vom anliegenden Moment vollführt. Damit wird ein Hub am Hubkolben erzeugt, der proportional zum Rekuperationsmoment ist.

Um den ersten und zweiten Bremskreislauf zu synchronisieren, ist vorzugsweise zwischen dem ersten und dem zweiten Bremskreislauf ein Proportionalventil angeordnet. Dieses ist standardmäßig offen, so dass ein Druckausgleich analog zu einem herkömmlichen Hauptbremszylinder in Tandem-Bauweise stattfindet, und wird bei Rekuperation geschlossen und zur Synchronisation der beiden Bremskreisläufe verwendet.

Vorzugsweise weist die Bremsanlage zudem noch einen Bremskraftverstärker auf. Aus der Entnahme von Hydraulikflüssigkeit aus dem ersten Bremskreislauf und dem damit verbundenen verringerten Bremsdruck, resultiert eine verringerte Pedalkraft. Durch das Vorsehen des regelbaren Bremskraftverstärkers ist in vorteilhafter Weise gewährleistet, dass dieser Effekt kompensiert wird, so dass der Fahrer des Kraftfahrzeugs am Pedal keine Änderung bemerkt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1: eine schematische Darstellung der erfindungsmäßen Bremsanlage, und
- Fig. 2: den Hauptbremszylinder aus Fig. 1 in einer anderen Ausführungsform.

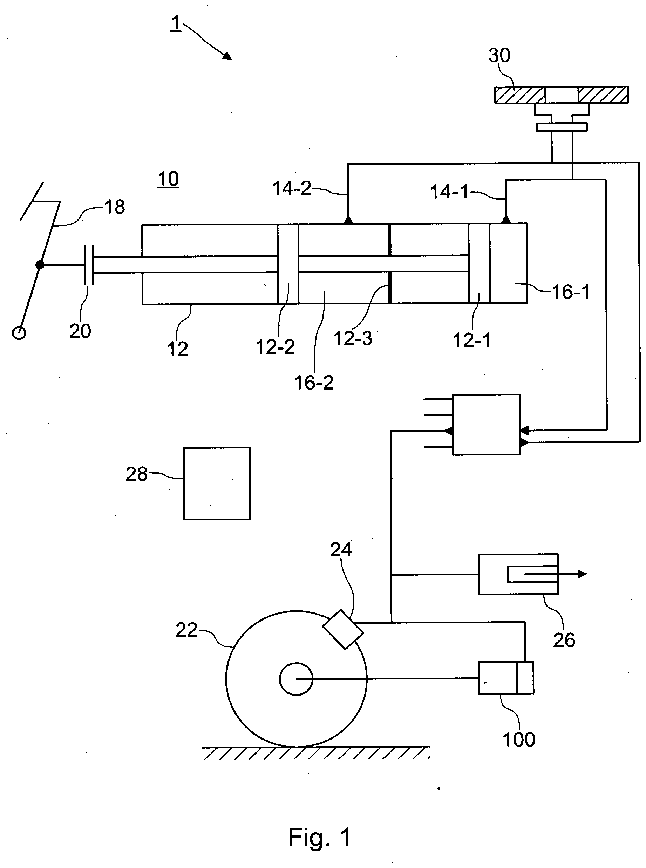

Fig. 1 zeigt eine insgesamt mit dem Bezugszeichen 1 bezeichnete Bremsanlage für ein Kraftfahrzeug.

Die Bremsanlage 1 weist eine insgesamt mit dem Bezugszeichen 10 bezeichnete hydraulische Bremse sowie einen als Rekuperator einsetzbaren Elektromotor 100 z.B. an der Hinterachse des Kraftfahrzeugs auf.

Bei einer Bremsanforderung seitens des Fahrers setzt sich folglich die auftretende Gesamtbremsleistung der Bremsanlage 1 aus der mechanischen Bremsleistung der hydraulischen Bremse 10 und dem Rekuperationsmoment des Elektromotors 100 zusammen.

Die hydraulische Bremse 10 umfasst einen Hauptbremszylinder 12, dessen erster Bremskolben 12-1 einen ersten Bremskreislauf 14-1 und dessen zweiter Bremskolben 12-2 einen vom ersten Bremskreislauf 14-1 getrennten zweiten Bremskreislauf 14-2 mit hydraulischen Bremsdruck versorgt.

Wie Fig. 1 weiter zu entnehmen ist, ist im Hauptbremszylinder 12 eine Trennwand 12-3 ausgebildet, die den Hauptbremszylinder 12 in eine dem ersten Bremskolben 12- 1 zugeordnete erste Druckkammer 16-1 und eine davon getrennte, dem zweiten Bremskolben 12-2 zugeordneten zweite Druckkammer 16-2 unterteilt. Zudem sind der erste Bremskolben 12-1 und der zweite Bremskolben 12-2 starr miteinander verbunden.

Weiterhin ist zur Betätigung des Hauptbremszylinders 12 in bekannter Art und Weise ein Bremspedal 18 vorgesehen, dass über einen elektrischen Bremskraftverstärker 20 mit den starr miteinander verbundenen Bremskolben 12-1, 12-2 in Wirkverbindung steht.

Der Hauptbremszylinder 12 weist eine Schwarz/Weiß-Aufteilung auf, d.h. der erste Bremskreislauf 14-1 vorsorgt die den Rädern der Hinterachse zugeordneten Bremssättel mit hydraulischen Bremsdruck und der zweite Bremskreislauf 14-2 vorsorgt entsprechend die den Rädern der Vorderachse zugeordneten Bremssättel mit hydraulischen Bremsdruck.

Der Übersichtlichkeit halber ist in Fig. 1 lediglich ein Rad 22 der Hinterachse und ein darin angeordneter Bremssattel 24 dargestellt.

Wie Fig. 1 weiter zu entnehmen ist, ist dem ersten Bremskreislauf 14-1 ein Blending-Mittel 26 zugeordnet, das während einer Rekuperationsphase des Elektromotors 100 dem ersten Bremskreislauf 14-1 Hydraulikflüssigkeit entnimmt.

Das Blending-Mittel ist vorliegend in Form eines über eine Steuer-/Regeleinheit 28 elektrisch angesteuerten Aktuators 26 ausgebildet.

Die Steuer-/Regeleinheit 28 kommuniziert mit einer Erfassungsvorrichtung, die bei einer Bremsanforderung des Fahrers ein vom Elektromotor 100 bereitstellbares Rekuperationsmoment ermittelt. Zudem steuert die Steuer-/ Regeleinheit 28 den Aktuator 26 so an, dass dieser dem ersten Bremskreislauf 14-1 so viel Hydraulikflüssigkeit entnimmt, dass der Bremsdruck im ersten Bremskreislauf 14-1 um den dem Rekuperationsmoment entsprechenden Bremsteildruck reduziert ist.

Aufgrund der Ausbildung des Hauptbremszylinders 12 mit der Trennwand 12-3 und der starren Anordnung der beiden Bremskolben 12-1 und 12-3 ist nunmehr sichergestellt, dass bei einer Bremsanforderung des Fahrers und Verzögerung der Hinterachse über die hydraulischen Bremse 10 und über das Rekuperationsmoment des Elektromotors 100, ein Druckausgleich im Hauptbremszylinders 12 nicht stattfindet, so dass eine Überbremsung der Hinterachse erfolgreich verhindert wird.

Durch den verringerten Bremsdruck im zweiten Bremskreislauf 14-2 entsteht eine verringerte Pedalkraft. Durch den Bremskraftverstärker 20 mit regelbarer Bremskraftunterstützung wird dieser Effekt wieder kompensiert werden, so dass der Fahrer am Pedal keine Änderung bemerkt.

Wie Fig. 1 weiter zu entnehmen ist, stehen die beiden Bremskreisläufe 14-1, 14-2 über einen zu- und abschaltbaren Schwimmkolben 30 hydraulisch kommunizierend miteinander in Wirkverbindung. Durch den zu- und abschaltbaren Schwimmkolben 30 ist in vorteilhafter Weise gewährleistet, dass bei einem rein hydraulischen Bremsvorgang, d.h. eine Rekuperationsmoment steht nicht zur Verfügung, entsprechend einem bekannten Hauptbremszylinder in Tandem-Bauweise ein Druckausgleich zwischen den beiden Bremskreisläufen 14-1 und 14-2 gewährleistet ist.

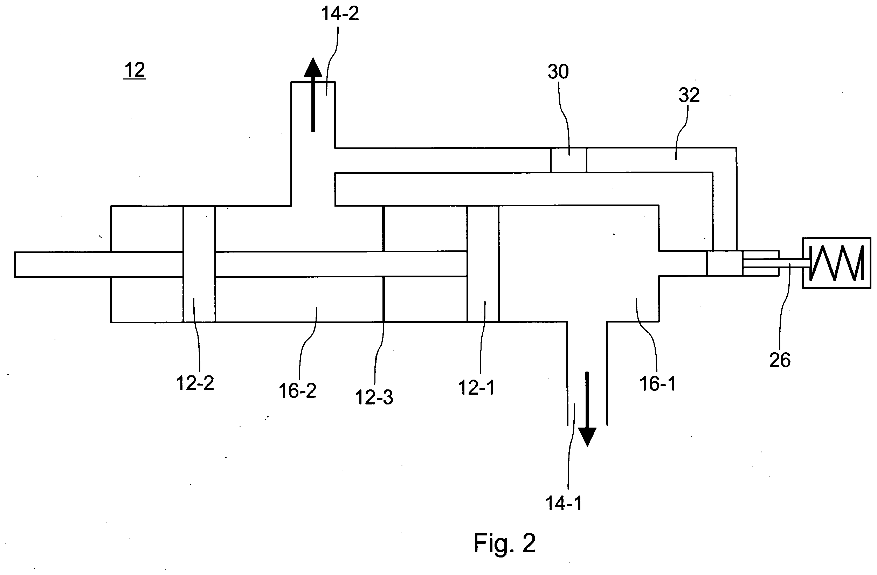

Fig. 2 zeigt eine weitere Ausführungsform des Hauptbremszylinders 12 aus Fig. 1. Hierbei ist der Schwimmkolben 30 in eine, die erste Druckkammer 16-1 und die zweite Druckkammer 16-2 miteinander hydraulisch kommunizierende Verbindungsleitung 32 integriert. Hierdurch ist in vorteilhafter Weise eine besonders kompakte Bauform gewährleistet.

## Patentansprüche

1. Bremsanlage (1) für ein Kraftfahrzeug, umfassend
- eine hydraulische Bremse (10), deren Hauptbremszylinder (12) einen ersten und einen zweiten Bremskolben (12-1, 12-2) aufweist, wobei der erste Bremskolben (12-1) einen einer ersten Fahrzeugachse zugeordneten ersten Bremskreislauf (14-1) und der zweite Bremskolben (12-2) einen davon getrennten, einer zweiten Fahrzeugachse zugeordneten zweiten Bremskreislauf (14-2) mit hydraulischen Bremsdruck versorgt;
- einen als Rekuperator einsetzbaren Elektromotor (100) an der ersten Fahrzeugachse, sowie
- ein Blending-Mittel (26), das während einer Rekuperationsphase des Elektromotors (100) dem der ersten Fahrzeugachse zugeordneten ersten Bremskreislauf (14-1) Hydraulikflüssigkeit entzieht,
wobei im Hauptbremszylinder (12) zwischen dem ersten und dem zweiten Bremskolben (12-1, 12-2) eine Trennwand (12-3) ausgebildet ist, die den Hauptbremszylinder (12) in eine dem ersten Bremskolben (12-1) zugeordnete erste Druckkammer (16-1) und eine davon getrennte, dem zweiten Bremskolben (12-2) zugeordnete zweite Druckkammer (16-2) unterteilt, und dass der erste und zweite Bremskolben (12-1, 12-2) starr miteinander verbunden sind, **dadurch gekennzeichnet, dass** die beiden Bremskreisläufe (14-1, 14-2) über einen zu- und abschaltbaren Schwimmkolben (30) hydraulisch kommunizierend miteinander verbindbar sind.

2. Bremsanlage (1) nach Anspruch 1, **dadurch gekennzeichnet, dass** das Blending-Mittel als ein über eine elektrische Steuer-und Regeleinheit (28) elektrisch angesteuerter Aktuator ausgebildet ist.

3. Bremsanlage (1) nach Anspruch 2, **dadurch gekennzeichnet, dass** eine mit der Steuer-Regeleinheit (28) kommunizierende Erfassungsvorrichtung vorgesehen ist, die bei einer Bremsanforderung eines Fahrers ein vom Rekuperator bereitgestelltes Bremsmoment - Rekuperationsmoment - ermittelt, und dass die Steuer- und Regeleinheit (28) den elektrischen Aktuator so ansteuert, dass dieser dem ersten Bremskreislauf (14-1) so viel Hydraulikflüssigkeit entnimmt, dass der Bremsdruck im ersten Bremskreislauf (14-1) um den dem Rekuperationsmoment entsprechenden Bremsteildruck reduziert ist.

4. Bremsanlage (1) nach Anspruch 1, **dadurch gekennzeichnet, dass** das Blending-Mittel (26) als ein mechanisch angesteuertes Stellglied ausgebildet ist.

5. Bremsanlage (1) nach Anspruch 4, **dadurch gekennzeichnet, dass** zwischen dem ersten und zweiten Bremskreislauf (14-1, 14-2) ein Proportionalventil geschaltet ist.

6. Bremsanlage (1) nach einem der vorangehenden Ansprüche, **dadurch gekennzeichnet, dass** ein Bremskraftverstärker (20) zur aktiven Beeinflussung der Bremspedalkraft vorgesehen ist.

## Claims

1. Brake system (1) for a motor vehicle, comprising
- a hydraulic brake (10), whose main brake cylinder (12) has a first and a second brake piston (12-1, 12-2), wherein the first brake piston (12-1) supplies a first brake circuit (14-1) assigned to a first vehicle axis with hydraulic brake pressure and the second brake piston (12-2) supplies a second brake circuit (14-2) separated from the first and assigned to a second vehicle axis with hydraulic brake pressure;
- an electric motor (100) usable as a recuperator at the first vehicle axis and
- a blending means (26), which removes hydraulic fluid from the first brake circuit (14-1) assigned to the first vehicle axis during a recuperation phase of the electric motor (100),
wherein a partition wall (12-3) is formed in the main brake cylinder (12) between the first and the second brake piston (12-1, 12-2), which divides the main brake cylinder (12) into a first pressure chamber (16-1) assigned to the first brake piston (12-1) and into a second pressure chamber (16-2) separated from the first and assigned to the second brake piston (12-2) and in that the first and second brake pistons (12-1, 12-2) are rigidly connected to each other, **characterised in that** the two brake circuits (14-1, 14-2) are connectable to each other in a hydraulically communicative manner via a floating piston (30) that can be switched on and off.

2. Brake system (1) according to claim 1, **characterised in that** the blending means is formed as an actuator that is electrically-actuated via an electric control and regulation unit (28).

3. Brake system (1) according to claim 2, **characterised in that** a detection device communicating with the control and regulation unit (28) is provided which determines a brake torque - recuperation torque - provided by the recuperator in the case of a brake requirement from the driver and **in that** the control and regulation unit (28) actuates the electric actuator such that it removes as much hydraulic fluid from the first brake circuit (14-1) so that the brake pressure in the first brake circuit (14-1) is reduced by the brake partial pressure corresponding to the recuperation torque.

4. Brake system (1) according to claim 1, **characterised in that** the blending means (26) is formed as a mechanically-actuated actuator.

5. Brake system (1) according to claim 4, **characterised in that** a proportional valve is connected between the first and second brake circuit (14-1, 14-2).

6. Brake system (1) according to any one of the preceding claims, **characterised in that** a brake booster (20) is provided to actively influence the brake pedal force.

## Revendications

1. Système de freinage (1) pour un véhicule automobile, comprenant
- un frein hydraulique (10) dont le cylindre de frein principal (12) comporte un premier et un deuxième piston de frein (12-1, 12-2), lequel premier piston de frein (12-1) alimente en pression de freinage hydraulique un premier circuit de freinage (14-1) associé à un premier essieu de véhicule et lequel deuxième piston de frein (12-2) alimente en pression de freinage hydraulique un deuxième circuit de freinage (14-2) associé à un deuxième essieu de véhicule et séparé du premier,
- un moteur électrique (100) utilisable comme récupérateur au niveau du premier essieu de véhicule, ainsi que
- un moyen de répartition (26) qui, pendant une phase de récupération du moteur électrique (100), extrait du fluide hydraulique du premier circuit de freinage (14-1) associé au premier essieu de véhicule,
dans lequel il est prévu dans le cylindre de frein principal (12) entre le premier et le deuxième piston de frein (12-1, 12-2) une paroi de séparation (12-3) qui divise le cylindre de frein principal (12) en une première chambre de pression (16-1) associée au premier piston de frein (12-1) et une deuxième chambre de pression (16-2) associée au deuxième piston de frein (12-2) et séparée de la première et dans lequel le premier et le deuxième piston de frein (12-1, 12-2) sont reliés de manière rigide l'un à l'autre,
**caractérisé en ce que** les deux circuits de freinage (14-1, 14-2) peuvent être reliés l'un à l'autre pour une communication hydraulique par l'intermédiaire d'un piston flotteur (30) pouvant être mis en circuit ou hors circuit.

2. Système de freinage (1) selon la revendication 1, **caractérisé en ce que** le moyen de répartition est conçu comme un actionneur commandé électriquement par l'intermédiaire d'une unité de commande et de régulation électrique (28).

3. Système de freinage (1) selon la revendication 2, **caractérisé en ce qu'**il est prévu un dispositif de détection qui communique avec l'unité de commande et de régulation (28) et qui détermine, lors d'une demande de freinage d'un conducteur, un couple de freinage - couple de récupération - fourni par le récupérateur et **en ce que** l'unité de commande et de régulation (28) commande l'actionneur électrique de telle sorte que celui-ci prend au premier circuit de freinage (14-1) autant de fluide hydraulique que la pression de freinage dans le premier circuit de freinage (14-1) est réduite de la pression partielle de freinage correspondant au couple de récupération.

4. Système de freinage (1) selon la revendication 1, **caractérisé en ce que** le moyen de répartition (26) est conçu comme un actionneur commandé mécaniquement.

5. Système de freinage (1) selon la revendication 4, **caractérisé en ce qu'**une valve proportionnelle est placée entre le premier et le deuxième circuit de freinage (14-1,14-2).

6. Système de freinage (1) selon l'une quelconque des revendications précédentes, **caractérisé en ce qu'**un amplificateur de force de freinage (20) est prévu pour influencer activement la force de pédale de frein.
